# FASCICULE DE BREVET EUROPEEN

(11) **EP 0 380 385 B1**
(45) Date de publication et mention de la délivrance du brevet: **01.06.1994**
(21) Numéro de dépôt: 90400109.6
(22) Date de dépôt: 16.01.1990
(51) Int. Cl.: B29C 69/02, B29D 31/00, B29C 45/14, B60J 10/04

(54) **Procédé de fabrication de joints d'étanchéité, notamment de coulisses pour glaces d'automobiles**
Verfahren zum Herstellen von Dichtungen, insbesondere Gleitführungen für Automobilfensterscheiben
Method for making seals, in particular slides for motor vehicle window panes

(30) Priorité: 24.01.1989 FR 8900784
(43) Date de publication de la demande: 01.08.1990
(73) Titulaire: HUTCHINSON, F-75008 Paris (FR)
(72) Inventeur: Guillon, Henri, F-45700 Le Bois st Maurice sur Fessard (FR)
(74) Mandataire: Orès, Bernard

(56) Documents cités:
- EP-A- 0 200 618
- FR-A- 2 165 229
- FR-A- 2 233 485
- FR-A- 2 247 341
- PATENT ABSTRACTS OF JAPAN, vol. 9, no. 57 (M-363)[1780], 13 mars 1985;& JP-A-59 192 547 (KINUGAWA GOMU KOGYO K.K.) 31-10-1984

## Description

L'invention est relative à un procédé de fabrication de joints d'étanchéité, notamment de dispositifs de guidage pour des surfaces qui peuvent être animées d'un mouvement relatif, comme des vitres, des surfaces métalliques et analogues. Elle vise, également, les joints obtenus par mise en oeuvre du procédé et, en particulier, les coulisses de guidage pour glaces d'automobiles en matériau élastomère ou plastomère.

Ces coulisses de guidage, décrites par exemple dans les documents EP-A- 0 200 618 et FR-A- 2 165 229 sont montées dans le chassis fixe ou cadre d'une porte, et comprennent généralement deux lèvres d'étanchéité portées par un profilé en forme de U, les deux lèvres s'appliquant contre les faces respectives de la vitre ou glace de porte et étant revêtues sur la partie de leur surface en contact avec la vitre ou glace d'un revêtement facilitant le glissement de celle-ci. Un tel revêtement est habituellement réalisé sous forme d'une couche de poils ou fibres textiles, naturels ou synthétiques, ou sous forme d'une couche mince de matière plastique à faible coefficient de frottement, comme par exemple une polyoléfine ou du polytétrafluoréthylène.

La couche de poils ou fibres est déposée par flocage sur les lèvres de la coulisse préalablement extrudée ou moulée; toutefois, la couche de poils ou de fibres est interrompue au niveau des angles supérieurs des portières dans le cas des coulisses moulées. Etant donné que ces dernières ne peuvent pas non plus être garnies d'une couche de glissant présentant les qualités requises,- une telle couche ne pouvant être obtenue que par coextrusion de la polyoléfine avec les autres parties constitutives de la coulisse -, le problème se pose de fournir des coulisses munies d'un revêtement glissant en matière plastique, ou d'une couche de poils ou fibres déposée par flocage qui ne présente pas de solution de continuité sur la totalité de sa longueur.

De telles coulisses sont en effet requises pour satisfaire les exigences des constructeurs d'automobiles modernes où les baies des vitres affectent des formes complexes qui nécessitent aussi, dans certains cas, des coulisses de profil variable.

C'est, par conséquent, un but de l'invention de fournir un procédé de fabrication d'une coulisse pour glace d'automobile de profil transversal variable et de profil longitudinal éventuellement non rectiligne à l'aide duquel la coulisse puisse être munie au choix d'un revêtement glissant en matière plastique, ou d'un revêtement glissant de poils ou fibres floqués qui règne sans discontinuité aux angles de la baie qu'équipe la coulisse.

Le problème est résolu, selon l'invention, par le fait que:
. l'on forme par extrusion les lèvres d'étanchéité de la coulisse sur lesquelles est déposé un revêtement glissant, soit par coextrusion d'un matériau approprié, soit par flocage, soit par combinaison de coextrusion et de flocage;
. l'on dispose lesdites lèvres dans un moule d'injection de forme correspondant à celle de la coulisse à fabriquer; et
. l'on injecte dans ledit moule le matériau élastomère ou plastomère destiné à former le corps de la coulisse et ainsi rendu solidaire par le moulage même desdites lèvres d'étanchéité.

L'invention a également pour objet les coulisses réalisées suivant le procédé précité comportant un corps de section variable et au moins une première lèvre d'étanchéité munie d'un revêtement glissant en matière plastique et/ou munie d'un revêtement glissant en poils ou fibres floqués déposé directement sur la lèvre ou sur une mince couche de matière plastique coextrudée avec la lèvre, ledit corps comportant éventuellement une partie à section droite évolutive.

D'autres caractéristiques et avantages de l'invention apparaîtront de la description qui suit, faite à titre d'exemple et en référence au dessin annexé, dans lequel:
- la figure 1 est une vue partielle d'une automobile, montrant un exemple d'application de l'invention;
- la figure 2 est une vue en perspective d'une coulisse pour glace d'automobile;
- la figure 3 montre le schéma de principe du procédé de fabrication d'une coulisse suivant l'invention;
- les figures 4 et 5 sont des vues schématiques comparatives de coulisses connue et suivant l'invention, respectivement;
- la figure 6 est une vue en coupe transversale d'une coulisse suivant l'invention;
- la figure 7 est une vue schématique en perspective, d'une partie de coulisse suivant l'invention;
- la figure 8 est une vue en coupe transversale d'une autre coulisse suivant l'invention.

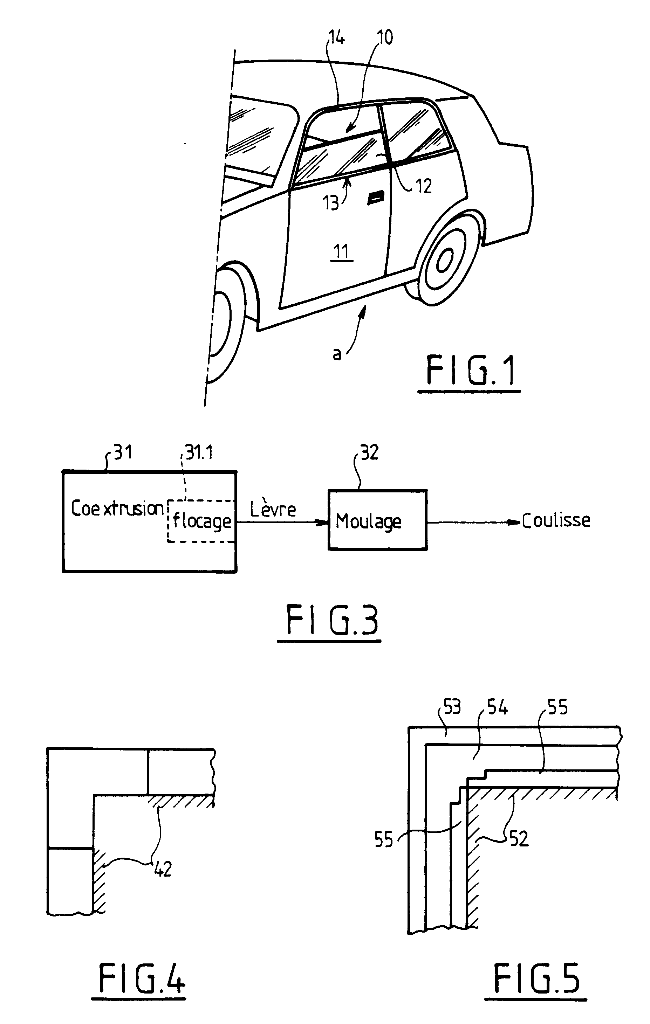

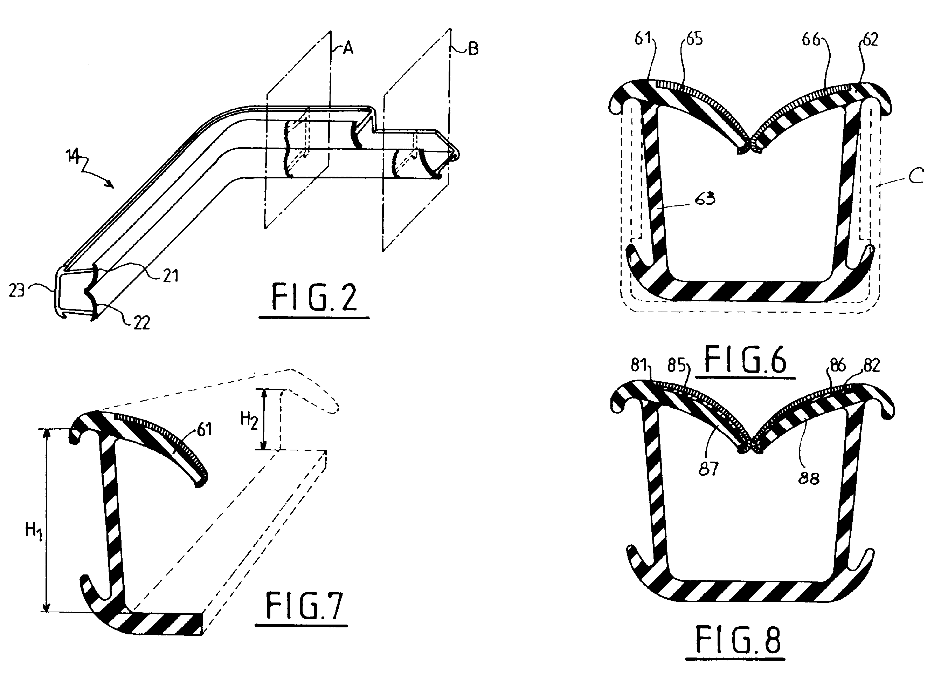

On se réfère d'abord à la figure 1 qui montre une automobile a dont la porte 11 ménage une baie 10 propre à être fermée par une vitre ou glace coulissante 12 dont les bords sont à la fois guidés et protégés par une coulisse 14 entourant la baie sur trois côtés, le quatrième étant occupé par un lécheur 13. Etant donné que les montants latéraux et la partie supérieure de la baie n'ont pas partout des profondeurs constantes ou égales, la section droite du corps de la coulisse n'est pas identique à elle-même sur toute la longueur de celle-ci, comme illustré par exemple sur la figure 7, de sorte que ladite coulisse ne peut pas être fabriquée par les techniques usuelles d'extrusion de plastomère ou d'élastomère. Pour pallier cette difficulté, l'invention propose alors un procédé de fabrication illustré sur le schéma en blocs - diagrammes de la figure 3.

Ce procédé comporte essentiellement deux phases distinctes:
. une première phase, 31, de fabrication des lèvres 21 et 22 d'étanchéité de la coulisse et de leur garniture favorisant le glissement, que celle-ci soit obtenue par extrusion, flocage ou éventuellement ces deux techniques; et
. une seconde phase, 32, de moulage, au cours de laquelle est formé le corps 23 de la coulisse, lequel est simultanément solidarisé avec les lèvres 21, 22 préalablement placées dans des cavités de forme appropriée du moule d'injection dudit corps 23.

Lorsque la garniture ou revêtement glissant est constitué exclusivement par une couche de matière plastique, la phase 31 ne comporte qu'une seule opération, ladite couche de glissant étant formée par coextrusion en même temps que la lèvre elle-même. Lorsque, par contre, la garniture ou revêtement glissant est constitué d'une couche de poils ou fibres déposés par flocage, la phase 31 comporte une opération 31₁ de dépôt par flocage de ladite couche de poils ou fibres.

Quand les deux techniques sont utilisées, la garniture ou revêtement favorisant le glissement est obtenu à l'aide d'une couche de polyéthylène d'épaisseur plus faible que celle d'un revêtement plastique glissant usuel, déposée par coextrusion sur la lèvre et qui sert, après réchauffage, d'adhésif pour l'accrochage des poils ou fibres floqués, tout en constituant une couche de sécurité en cas de destruction accidentelle ou par usure de la couche floquée.

Quel que soit leur mode de réalisation, les lèvres d'étanchéité 21 et 22 ayant un profil constant et étant constituées d'un matériau plus souple que celui du corps 23 sont extrudées sans difficulté. Elles sont ensuite placées dans des cavités d'un moule dont la géométrie correspond à la forme du corps 23 et le matériau élastomère ou plastomère constitutif dudit corps est alors injecté dans le moule avec pour résultat la formation dudit corps mais également la solidarisation de celui-ci aux lèvres d'étanchéité 21 et 22. On peut ainsi obtenir à l'aide d'un moule 53, figure 5, un corps de coulisse 54 dont les lèvres d'étanchéité 55 sont garnies sur leur totalité d'un revêtement 52 facilitant le glissement, et cela contrairement aux réalisations antérieures illustrées schématiquement sur la figure 4 ou le revêtement 42 favorisant le glissement est interrompu dans l'angle de la coulisse.

La figure 6 montre la section, par le plan A de la figure 2, d'une coulisse réalisée suivant l'invention et dont le revêtement glissant est constitué par une couche de matière plastique. Les lèvres d'étanchéité 61, 62 et les couches de glissant 65, 66 ont été coextrudées puis solidarisées avec le corps 63 de la coulisse, lors du moulage de celui-ci a une forme prévue pour coopérer avec le cadre C, montré en pointillés, d'une porte d'automobile.

Le procédé selon l'invention se prête particulièrement bien à la réalisation de coulisses à section droite évolutive, comme montré sur la figure 7 où la section de la coulisse est supposée prise dans le plan B de la figure 2, avec une hauteur H₂ à une extrémité nettement inférieure à la hauteur H₁ à l'autre extrémité.

La figure 8 montre, en section, une autre coulisse suivant l'invention dont les couches de glissant 81, 82 coextrudées avec les lèvres d'étanchéité 87 et 88 est d'épaisseur moindre que celle des couches 61, 62 de la réalisation précédente et est revêtue d'une couche de poils floqués 85, 86.

## Revendications

1. Procédé de fabrication d'un joint d'étanchéité, notamment d'une coulisse pour glace d'automobile comportant au moins une lèvre d'étanchéité munie d'une garniture ou revêtement facilitant le glissement portée par le corps de la coulisse, caractérisé par le fait que:
. l'on forme par extrusion les lèvres d'étanchéité (21, 22; 61, 62...) de la coulisse sur lesquelles est déposé un revêtement glissant (65, 66; 81, 82; 86, 86), soit par coextrusion d'un matériau approprié, soit par flocage, soit par combinaison de coextrusion et de flocage;
. l'on dispose lesdites lèvres dans un moule d'injection de forme correspondant à celle de la coulisse à fabriquer; et
. l'on injecte dans ledit moule le matériau élastomère ou plastomère destiné à former le corps dela coulisse et ainsi rendu solidaire par le moulage même desdites lèvres d'étanchéité.

2. Procédé selon la revendication 1, caractérisé en ce que la garniture ou revêtement facilitant le glissement est réalisé à l'aide d'une mince couche (81, 82) de matière plastique comme du polyéthylène déposé par coextrusion sur la lèvre d'étanchéité (87, 88) et en ce que ladite couche mince est munie d'un flocage de poils ou fibres (85, 86).

3. Coulisse obtenue par mise en oeuvre du procédé selon l'une quelconque des revendications précédentes, caractérisée en ce que son corps (23, 63...) est moulé par injection d'un matériau élastomère ou plastomère.

4. Coulisse selon la revendication 3, caractérisée en ce que la garniture ou revêtement favorisant le glissement (52; 65, 66; 85, 86...) règne sur la totalité de sa longueur, sans solution de continuité.

## Patentansprüche

1. Verfahren zur Herstellung einer Dichtung, insbesondere einer Gleitführung für Automobilfensterscheiben, wenigstens eine Dichtungslippe umfassend, die mit einer das Gleiten erleichternden Verkleidung oder Abdeckung versehen ist, welche vom Körper der Gleitführung getragen wird, dadurch gekennzeichnet, daß
. man durch Extrusion die Dichtungslippen (21, 22; 61, 62...) der Gleitführung formt, auf denen ein Gleitüberzug (65, 66; 81, 82; 85, 86) entweder durch Koextrusion eines geeigneten Materials oder durch Beflockung oder durch Kombination von Extrusion und Beflockung abgeschieden wird;
. man diese Lippen in einer Spritzform einer Gestalt anordnet, die der der herzustellenden Gleitführung entspricht; und
. man in diese Form das Elastomer- oder Plastomermaterial injiziert, das dazu bestimmt ist, den Körper der Gleitführung zu bilden und so fest durch eben diese Formung mit diesen Dichtungslippen gemacht wird.

2. Verfahren nach Anspruch 1, dadurch gekennzeichnet, daß die Verkleidung oder der Überzug, die oder der das Gleiten erleichtert, hergestellt wird mit Hilfe einer dünnen Schicht (81, 82) plastischen Materials wie Polyethylen, das durch Koextrusion auf die Dichtungslippe (87, 88) abgeschieden wird, und daß diese dünne Schicht mit einer Beflockung aus Florfäden oder Fasern (85, 86) versehen wird.

3. Gleitführung, hergestellt durch Verwirklichung des Verfahrens eines der vorhergehenden Ansprüche, dadurch gekennzeichnet, daß ihr Körper (23, 63...) durch Injektion eines Elastomer- oder Plastomermaterials geformt ist.

4. Gleitführung nach Anspruch 3, dadurch gekennzeichnet, daß die das Gleiten begünstigende Auskleidung oder der das Gleiten begünstigende Überzug (52; 65, 66; 85, 86...) über die Gesamtheit ihrer Länge ohne Unterbrechungen der Kontinuität vorherrscht.

## Claims

1. Method of producing a sealing gasket, in particular of a run for a motor vehicle window having at least one sealing lip which is equipped with a covering or coating facilitating sliding and is carried by the body of the run, characterized in that :
- the sealing lips (21, 22 ; 61, 62...) of the run on which sealing lips a sliding coating (65, 66 ; 81, 82 ; 85, 86) is deposited, are formed by extrusion either by coextrusion of an appropriate material, by flocking, or by a combination of coextrusion and flocking ;
- the said lips are arranged in an injection mould having a shape corresponding to that of the run to be produced ;
- the elastomer or plastomer material which is intended to form the body of the run and which has thus been rendered integral by the very moulding of the said sealing lips is injected into the said mould.

2. Method according to Claim 1, characterized in that the covering or coating facilitating sliding is produced with the aid of a thin layer (81, 82) of plastic material such as polyethylene deposited by coextrusion onto the sealing lip (87, 88), and in that the said thin layer is provided with a flocking of hairs or fibres (85, 86).

3. Run obtained by carrying out the method according to any one of the preceding claims, characterized in that its body (23, 63...) is injection-moulded from an elastomer or plastomer material.

4. Run according to Claim 3, characterized in that the covering or coating promoting sliding (52 ; 65, 66 ; 85, 86...) covers the whole of its length, without a solution of continuity.
